# EUROPÄISCHE PATENTSCHRIFT

(11) **EP 1 023 563 B1**
(45) Veröffentlichungstag und Bekanntmachung des Hinweises auf die Patenterteilung: **16.11.2005**
(21) Anmeldenummer: 98954416.8
(22) Anmeldetag: 14.10.1998
(51) Int. Cl.: F25D 23/06

(54) **WÄRMEISOLIERENDE WANDUNG**
HEAT-INSULATING WALL
PAROI CALORIFUGE

(30) Priorität: 16.10.1997 DE 19745861; 16.10.1997 DE 19745859; 16.10.1997 DE 19745862; 16.10.1997 DE 19745825
(43) Veröffentlichungstag der Anmeldung: 02.08.2000
(73) Patentinhaber: BSH Bosch und Siemens Hausgeräte GmbH, 81739 München (DE)
(72) Erfinder: HIRATH, Jürgen, D-89522 Heidenheim (DE); SCHÜTTE, Markus, D-90409 Nürnberg (DE)
(86) Internationale Anmeldenummer: PCT/EP1998/006526
(87) Internationale Veröffentlichungsnummer: WO 1999/020959

(56) Entgegenhaltungen:
- US-A- 1 898 977
- US-A- 2 518 673
- US-A- 3 161 265
- US-A- 3 380 615
- US-A- 5 634 256

## Beschreibung

Die Erfindung betrifft eine wärmeisolierende Wandung mit zwei im Abstand zueinander angeordneten, zumindest im wesentlichen vakuumdichten Deckschichten, zwischen welchen evakuierbares Wärmeisolationsmaterial angeordnet ist und welche mit einem entlang ihrer freien Ränder verlaufenden, vakuumdichten Verbindungsprofil miteinander verbunden sind, welches eine zumindest im wesentlichen den Abstand zwischen den beiden Deckschichten überbrückende Membran aufweist und welches sich aus mehreren vakuumdicht aneinander angeschlossenen Profilabschnitten zusammensetzt.

Bei wärmeisolierenden Wandungen und Gehäusen, basierend auf Vakuumisolationstechnik, sind die Wandungsschalen aus Edelstahlblech oder korrosionsgeschütztem Stahlblech gefertigt und miteinander durch ein an beiden Wandungsschalen schweißtechnisch vakuumdicht festgesetztes Verbindungsprofil miteinander verbunden.

In seinen überwiegenden Anwendungsfällen ist das Verbindungsprofil hierbei in einzeine Längsabschnitte unterteilt, um einerseits eine kostengünstige Herstellung für das Verbindungsprofil zu erreichen und andererseits den Fertigungs- und Formtoleranzen an seiner Fügestelle zwischen den beiden Wandungsschalen entgegenwirken zu können. Dieser modulare Aufbau des Verbindungsprofil bringt jedoch mit sich, daß die einzelnen Längsabschnitte untereinander vakuumdicht miteinander verbunden werden müssen. Als Verbindungstechnik zur Herstellung eines vakuumdichten Verbundes an der Stoßstelle zwischen den einzelnen Verbindungsprofil-Längsabschnitten wird üblicherweise Schweißtechnik eingesetzt. Eine fachgerechte, vakuumdichte Verschweißung der Verbindungsprofile an ihrer Stoßstelle gestaltet sich insbesondere dann schwierig, wenn, wie bereits vorgeschlagen wurde, das Verbindungsprofil zur Überbrückung des Abstandes zwischen den beiden Wandungsschalen zur Herabsetzung der Wärmeleitung aus einer membranartig dünnwandigen Wand gebildet ist. Mit den bekannten Schweißverfahren läßt sich eine Stoßstelle zwischen zwei Wänden mit membranartiger Wandstärke in einer Großserienfertigung keineswegs prozeßsicher vakuumdicht verschließen.

Der Erfindung liegt die Aufgabe zugrunde, bei einer wärmeisolierenden Wandung gemäß dem Oberbegriff des Anspruches 1 die Profillängsabschnitte des Verbindungsprofiles mit einfachen konstruktiven Maßnahmen derart zu gestalten, daß ein prozeßsicheres vakuumdichtes Verbinden der Profilabschnitte an ihren Stoßstellen durch Anwendung von Schweißtechnik gewährleistet ist.

Diese Aufgabe wird gemäß der Erfindung dadurch gelöst, daß die Membran an den einander anschließenden Enden der Profilabschnitte je einen Endabschnitt aufweist, welcher zumindest annähernd auf die Materialstärke der Deckschichten verstärkt ist.

Unter Membran soll in diesem Zusammenhang eine im Vergleich zu den Deckschichten mit deutlich verringerter Materialstärke ausgestattete Wand verstanden sein.

Durch die Verdickung der dünnwandigen, die Membran bildenden Wand an ihren die Stoßstelle zwischen zwei aneinandergefügten Profilabschnitten bildenden Enden ist ein prozeßsicherer, großseriengerechter Verbund der Profilabschnitte an ihren aneinandergefügten Enden unter gleichzeitiger Erzieiung einer verminderten Wärmeleitung zwischen den übereinander beabstandeten Deckschichten gewährleistet. Die partielle Verdickung der membranartigen, die beiden Deckschichten miteinander verbindenden Wand hat keine merklich nachteilige Wirkung auf das Wärmeisolationsvermögen der wärmeisolierenden Wandungen und Gehäuse.

Besonders einfach und prozeßsicher großseriengerecht verbinden läßt sich das Verbindungsprofil mit den Deckschichten, wenn nach einer vorteilhaften Ausgestaltung des Gegenstandes der Erfindung vorgesehen ist, daß das Verbindungsprofil einen u-profilartigen Querschnitt aufweist, wobei die Schenkel des U-Profils an den Deckschichten vakuumdicht festgesetzt sind, während die Basis als Membran ausgebildete des U-Profils zumindest weitestgehend den Abstand zwischen den Deckschichten überbrückt.

Entsprechend einer weiteren bevorzugten Ausführungsform des Gegenstandes der Erfindung ist vorgesehen, daß die Verstärkung des Endabschnitts der Membran durch ein Verstärkungsteil erzielt ist.

Durch die Anwendung eines gesonderten Verstärkungsteiles zur Anhebung der Materialstärke der Membran an ihren Endabschnitten kann durch Variation der Materialstärke des Verstärkungsteiles auf besonders einfache und kostengünstige Weise eine hohe Prozeßsicherheit in der Großserienfertigung der wärmeisolierenden Wandungen herbeigeführt werden. In Verbindung mit der Anwendung eines im Querschnitt u-profilartigen Verbindungsprofiles ist die Länge des Verstärkungsteiles zumindest annähernd auf den lichten Abstand der U-Profilschenkel bemessen, so daß sich das Verstärkungsteil auf besonders einfache Weise positionsgenau zur Anhebung der Materialstärke der Endabschnitte der Membrane zu dem Verbindungsprofil fügen läßt, da die positionsrichtige Lage des Verstärkungsteil einerseits durch den Abstand der beiden U-Profilschenkel und andererseits durch das freie Ende der Membran bestimmt ist.

Nach einer weiteren bevorzugten Ausführungsform des Gegenstandes der Erfindung ist vorgesehen, daß das Verstärkungsteil an der Membrane der einzelnen Profilabschnitte bei deren Herstellung vakuumdicht festgesetzt ist.

Durch die Verwendung bereits mit dem Verstärkungsteil bestückter Profilabschnitte vereinfacht sich die Montage der Profilabschnitte zwischen den Deckschichten im wesentlichen, da die Positionierung der Verstärkungsteile während des Fertigungsablaufes der wärmeisolierenden Wandungen vermieden ist, wodurch sich der Fertigungsablauf dieser Wandungen nicht nur rascher sondern auch prozeßsicherer gestaltet.

Bei der Anwendung eines als U-Profil gestalteten Verbindungsprofils wird das Verstärkungsteil vor dem Schweißprozeß an seine positionsrichtige Lage gebracht und im Rahmen des Schweißprozesses mit zur Herstellung der Profilabschnitte, nämlich zwischen der Membran und den Schenkeln, vakuumdicht an den Profilabschnitten festgesetzt.

Durch die Verschweißung des Verstärkungsteils mit den Schenkeln und der Membrane des Profilabschnittes bei dessen Herstellungsprozeß ist sichergestellt, daß am Anbringungsort des Verstärkungsteiles keinerlei, gegebenenfalls zu Undichtigkeiten führende, von der Verschweißung der Schenkel mit der Membran herrührende Materialablagerungen vorhanden sind. Durch die Abstimmung der Länge des Verstärkungsteils auf den lichten Abstand zwischen den beiden Schenkeln der u-profilartigen Profilabschnitte wird eine Spaltbildung zwischen den Schenkeln und den ihnen zugewandten Rändern des Verstärkungsteiles unterbunden, wodurch die prozeßsichere Verschweißung des Verstärkungsteils mit dem Profilabschnitt deutlich gesteigert ist.

Besonders positionsgenau, ohne zusätzliche Positionierungsmaßnahmen herbeiführbar ist die Verstärkung der Endabschnitte an der Membran eines Profilabschnittes, wenn nach einer alternativen Ausführungsform des Gegenstandes der Erfindung vorgesehen ist, daß die Verstärkung des Endabschnittes an der Membran anhand eines durch mehrmaliges Umfalzen erzeugten Richtung eines einstückig an die Membran mitangeformten Fortsatzes erzielt ist.

Entsprechend einer nächsten bevorzugten Ausführungsform des Gegenstandes der Erfindung ist vorgesehen, daß die aneinander anschließenden, verstärkt ausgeführten Endabschnitte der Membrane an den Profilabschnitten auf einem vakuumdicht an den Deckschichten festgesetzten Stützelement aufliegen und mit diesem vakuumdicht verbunden sind.

Durch die Einbringung von Stützelementen zwischen die Deckschichten ist für die einzelnen Profilabschnitte der Verbindungsprofile an deren Stoßstellen nicht nur eine Montagehilfe in Form eines Auflagers geschaffen, sondern zudem auch eine Abstützmaßnahme bereitgestellt, welche die vakuumdicht miteinander zu verbindenden Enden der Profilabschnitte gegen die beim Schweißvorgang zur Vermeidung von Verwerfungen notwendigen Spannkräfte in Richtung des mit Wärmeisolationsmaterial verfüllten Zwischenraumes aufzunehmen vermag. Ferner ist durch das als Stützelement dienende Auflager sichergestellt, daß die vakuumdicht bezüglich der Deckschichten festzusetzenden Profilabschnitte zumindest weitestgehend höhengleich angeordnet sind, wodurch sich nicht nur die vakuumdichte Befestigung entlang der Schenkel der Profilabschnitte, beispielsweise durch Verschweißen deutlich erleichert ist, sondern auch die vakuumdichte Verbindung der Enden der Profilabschnitte mit dem Auflager, zum Beispiel ebenfalls durch Verschweißen deutlich einfacher darstellt. Durch die Anhebung der Materialstärke an den Endabschnitten der Membrane lassen sich die Endabschnitte unmittelbar, ohne Anwendung eines zusätzlichen die Fügestelle überdeckenden Deckprofils vakuumdicht mit den Stützelementen, beispielsweise durch Verschweißen, verbinden. Die als Stützelement ausgebildeten Auflager ermöglichen zudem ein rasches, positionsgenaues Einbringen der Profilabschnitte zwischen den äußeren Deckschichten, wodurch zusätzliche, zum vakuumdichten Verbinden der Profilabschnitte mit den Deckschichten an sich notwendige Justiermaßnahmen entfallen können, so daß sich eine kostengünstige Fertigung für die wärmeisolierenden Wandungen und Gehäuse ergibt.

Nach einer nächsten bevorzugten Ausführungsform des Gegenstandes der Erfindung ist vorgesehen, daß das Stützelement als U-Profil ausgebildet ist, auf dessen Basis die verstärkten Endabschnitte der Membrane aufliegen und mit dieser vakuumdicht verbunden sind.

Ein in Art eines U-Profils ausgebildetes Stützelement verfügt infolge seiner Gestalt bereits über eine gewisse Formsteifigkeit, wobei die als Auflager der aneinandergefügten Enden der Profilabschnitte dienende, die Schenkel des U-Profils verbindende Basis eine flächige Anlagemöglichkeit für die verstärkten Endabschnitte der Membrane darstellt, so daß diese Endabschnitte besonders prozeßsicher ohne Verwendung zusätzlicher Hilfsmittel vakuumdicht an den Stützelementen, beispielsweise durch Schweißen festsetzbar sind.

Gemäß einer weiteren bevorzugten Ausführungsform des Gegenstandes der Erfindung ist vorgesehen, daß das als U-Profil ausgebildete Stützelement mit seinen Stirnflächen an den Deckschichten festgesetzt ist.

Durch eine derartige Einbringung des Stützelements zwischen den Deckschichten sind deren Trageigenschaften zur Abstützung der bei der Montage der einzelnen Profilabschnitte auftretenden Spannkräfte deutlich erhöht, da durch die Anordnung der Schenkel das Widerstandsmoment der Stützelemente gegen Durchbiegung wesentlich gesteigert ist. Ferner ist die durch das Stützelement zwischen den Deckschichten hervorgerufene Wärmeleitung minimiert.

Entsprechend einer nächsten vorteilhaften Ausgestaltung des Gegenstandes der Erfindung ist vorgesehen, daß das als U-Profil ausgebildete Stützelement neben seinen Schenkeln an seinen Stirnseiten mit schenkelseitig gegenüber seiner Basis vorspringenden Laschen versehen ist, welche an den Deckschichten festgesetzt sind.

Durch die Anbringung der Laschen an den Stirnseiten der Stützelemente lassen sich diese besonders einfach und rasch an den Deckschichten beispielsweise durch Verschweißen befestigen, so daß der Verschweißvorgang nicht an den ziemlich eng begrenzten Stirnflächen des U-Profiles stattfinden muß, sondern an den deutlich großflächigeren Laschen stattfinden kann, welche zudem noch ein prozeßsicheres, vakuumdichtes Verschweißen der Stützelemente mit den Deckschichten erlauben.

Nach einer weiteren bevorzugten Ausführungsform des Gegenstandes der Erfindung ist vorgesehen, daß das Stützelement als Napf mit wenigstens zwei zumindest annähernd parallel einander gegenüberliegenden Napfwinden ausgebildet ist, mit welchen es an den Deckschichten festgesetzt ist.

Derartige Stützelemente lassen sich besonders kostengünstig in großen Stückzahlen, beispielsweise durch Tiefziehen von dünnwandigem Edelstahlblech oder dergleichen, mit unterschiedlichen Geometrien und Abstützeigenschaften herstellen.

Besonders dauerhaft vakuumdicht bei geringem Eigengewicht und geringer Wärmeleitung läßt sich ein wärmeisolierendes Gehäuse und eine wärmeisolierende Tür für ein Kältegerät herstellen, wenn nach einer weiteren bevorzugten Ausführungsform des Gegenstandes der Erfindung vorgesehen ist, daß das Gehäuse und die Tür nach einem der Ansprüche 1 bis 11 ausgebildet ist.

Ebenfalls besonders dauerhaft vakuumdicht mit besonders geringer Wärmeleitung und mit geringem Eigengewicht läßt sich eine den Backraum umschließende wärmeisolierende Herdmuffel eines Haushaltsherdes herstellen, wenn nach einer letzten bevorzugten Ausführungsform des Gegenstandes der Erfindung vorgesehen ist, daß die Herdmuffel nach einem der Ansprüche 1 bis 11 ausgebildet ist.

Die Erfindung ist in der nachfolgenden Beschreibung anhand eines am Beispiel eines vereinfacht dargestellten Haushaltskühlschrankes erläutert.

### Es zeigen:

- Fig. 1: in vereinfachter schematischer Darstellung ein wärmeisolierendes Gehäuse eines Haushaltskühlschrankes, mit zwei zueinander beabstandet angeordneten, an den freien Rändern mit einem Verbindungsprofil vakuumdicht verschweißten Deckschichten in Schnittdarstellung von der Seite,
- Fig. 2: das Gehäuse mit dem seine Deckschichten verbindenden Verbindungsprofil in Schrägansicht von vorne,
- Fig. 3: in einem vergrößerten Ausschnitt das wärmeisolierende Gehäuse im Bereich des die beiden Deckschichten verbindenden Verbindungsprofils gemäß der Schnittlinie III-III und
- Fig. 4: ausschnittsweise das wärmeisolierende Gehäuse mit einer seiner Deckschichten und mit den daran angeordneten, aus mehreren Profilabschnitten zusammengefügten Verbindungsprofil, in raumbildlicher Schnittansicht von vorne.

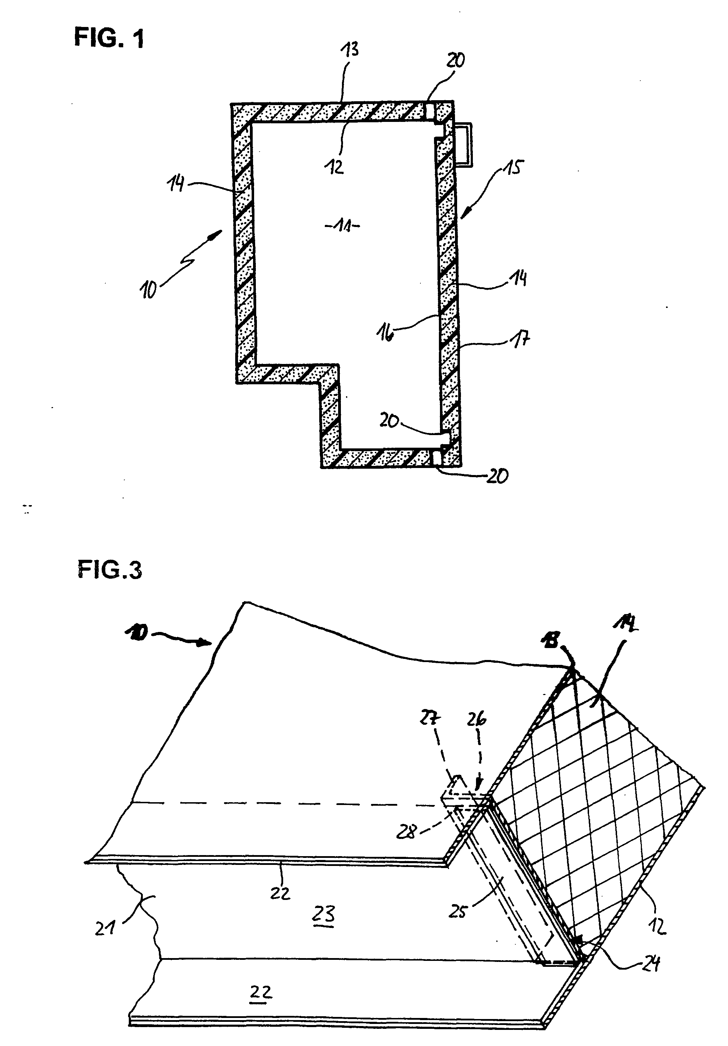

Figur 1 zeigt ein zur Verwendung bei einem auf Vakuumisolationstechnik basierendes Haushaltskühlschrank geeignetes, wärmeisolierendes Gehäuse 10 mit einem als Kühlfach ausgebildeten Nutzraum 11, welcher von einer als Innenverkleidung dienenden Deckschicht 12 ausgekleidet ist, welche beispielsweise aus einer Edelstahlblechplatine oder einer korrosionsgeschützten Stahlblechplatine mit einer Materialstärke von ca. 4,0 mm oder aus einer metallbeschichteten bzw. laminierten Kunststoffplatine geformt ist. Im Abstand zur Deckschicht 12 weist das Gehäuse 10 eine weitere Deckschicht 13 auf, welche als Außenverkleidung dient und welche aus den Materialien geformt ist, wie sie zur Herstellung der Deckschicht 12 zur Anwendung kommen. Zwischen den beiden Deckschichten 12 und 13 ist ein zu deren Abstützung dienendes Stützmaterial in Form von offenzelligem Wärmeisolationsmaterial 14, wie beispielsweise plattenförmigen Polyurethanschaum oder plattenförmigen Polystyrolschaum eingebracht. Ein derartiges Wärmeisolationsmaterial kommt auch bei einer am Öffnungsrand des Gehäuses angeschlagenen Tür 15 zum Einsatz und dient zur Abstützung einer die Türinnenverkleidung bildenden innenliegenden Deckschicht 16 gegen eine als Türaußenverkleidung dienende außenliegende Deckschicht 17. Sowohl die Deckschichten 16 und 17 als auch die Deckschichten 12 und 13 sind an ihren freien Rändern durch ein Verbindungsprofil 20 vakuumdicht miteinander verbunden, so daß zwischen den beiden Deckschichten ein evakuierter, mit Wärmeisolationsmaterial 14 verfüllter Zwischenraum gebildet ist.

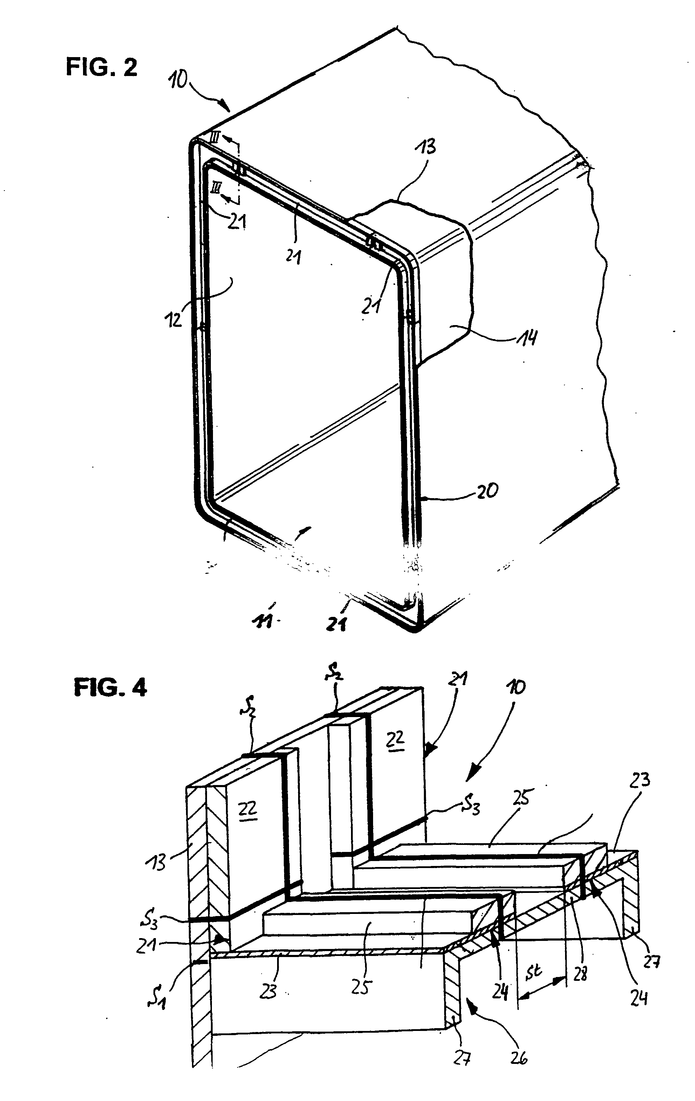

Wie insbesondere aus Figur 2 hervorgeht, ist das am Beispiel des wärmeisolierenden Gehäuses 10 gezeigte Verbindungsprofil 20 seiner Länge nach in mehrere Profilabschnitte 21 unterteilt. Die Profilabschnitte 21 sind im Querschnitt in Form eines U-Profiles ausgebildet, dessen zum Beispiel aus Edelstahlblech oder korrosionsgeschütztem Stahlblech hergestellte Schenkel 22 in etwa die Materialstärke der Deckschichten 12 bzw. 13 aufweisen und dessen Schenkel 22 miteinander verbindende als Membran ausgebildete Basis 23 aus folienartigem Edelstahl oder Stahlblech mit einer Materialstärke von beispielsweise 0,1 mm erzeugt ist, welche somit wesentlich unter der Materialstärke der Schenkel 22 bzw. der Deckschichten 12 und 13 liegt. Die dünnwandige Basis 23 eines jeden Profilabschnitts 21 weist ein an deren freien Ende angeordneten, bezüglich der Materialstärke der Basis 23 verstärkt ausgeführten Endabschnitt 24 auf. Zur Verstärkung des Endabschnitts 24 ist ein zumindest im wesentlichen die Materialstärke der Schenkel 22 bzw. der Deckschichten 12 und 13 aufweisendes Verstärkungsteil 25 vorgesehen, welches, wie insbesondere aus den Figuren 3 und 4 ersichtlich ist, zumindest weitestgehend bündig mit dem freien Ende der Basis 23 abschließt.
Wie insbesondere aus Figur 3 hervorgeht, ist das beispielsweise aus Edelstahl oder korrosionsgeschütztem Stahlblech gefertigte Verstärkungsteil 25 hinsichtlich seiner Länge auf den lichten Abstand der Schenkel 22 abgestimmt, so daß das Verstärkungsteil 25 zumindest weitestgehend paßgenau zwischen die beiden Schenkel 22 einfügbar ist und die Stirnseiten des Verstärkungsteils 25 zumindest weitestgehend an den ihnen zugewandten Innenseiten der Schenkel 22 anliegen.

Wie insbesondere die Figuren 3 und 4 zeigen, sind als Auflager für die freien Enden der Profilabschnitte 21 als U-Profil ausgeführte, bezüglich der freien Ränder der Deckschichten 12 und 13 zurückversetzt angeordnete Stützelemente 26 vorgesehen, dessen Schenkel 27 quer zu den Schenkeln 22 angeordnet sind und dessen Basis 28 als Auflagefläche für die einander zugewandten, eine Stoßstelle St zwischen sich ausbildenden Enden von zwei benachbart zueinander angeordneten Profilabschnitten 21 dient. Die Stützelemente 26 sind mit ihren den Deckschichten 12 und 13 zugewandten Stirnseiten durch eine entlang der Stirnseitenkontur geführten Schweißnaht S1 vakuumdicht mit den Deckschichten 12 und 13 verbunden. Zur vakuumdichten Befestigung der Profilabschnitte 21 an den Deckschichten 12 und 13 sind an den auf den Stützelementen 26 aufliegenden Endabschnitten zwei annähernd im parallelen Abstand zu einander angeordnete, beispielsweise mit einem Strahlschweißfaden hergestellte Schweißnähte S2 vorgesehen, welche den geschichteten Aufbau, gebildet aus dem Verstärkungsteil 25, der Basis 23 und der Basis 26, durchdringt und welche sich über die Höhe der Schenkel 22 bis hin zu deren feien Ende erstreckt und die Schenkel 22 mit den Deckschichten 12 und 13 miteinander verbindet. Ferner sind die Schenkel 22 mit den Deckschichten 12 und 13 mit einer in Längsrichtung der Schenkel 22 verlaufenden Schweißnaht S3 vakuumdicht verbunden, welche sich mit den über die Höhe der Schenkel 22 erstreckenden vertikalen Abschnitt der Schweißnaht S2 kreuzt, welche sich ihrerseits wieder mit der Schweißnaht S1 an der Stirnseite des Stützelementes 26 kreuzt. Durch die Anordnung der Schweißnähte S1 bis S3 ist an der Stoßstelle St zwischen zwei Profilabschnitten 21 schweißtechnisch ein vakuumdichter Verbund zwischen den Profilabschnitten 21 und den Deckschichten 12 und 13 erreicht, wobei die Schweißnaht S3 den vakuumdichten Verbund zwischen den Deckschichten 12 und 13 mit den Schenkeln 22 entlang dieser sicherstellt.

## Patentansprüche

1. Wärmeisolierende Wandung mit zwei im Abstand zueinander angeordneten, zumindest im wesentlichen vakuumdichten Deckschichten, zwischen welchen evakuierbares Wärmeisolationsmaterial angeordnet ist und welche mit einem entlang ihrer freien Ränder verlaufenden, vakuumdichten Verbindungsprofil miteinander verbunden sind, welches eine zumindest im wesentlichen den Abstand zwischen den beiden Deckschichten überbrückende Membran aufweist und welches sich aus mehreren vakuumdicht aneinander angeschlossenen Profilabschnitten zusammensetzt, **dadurch gekennzeichnet, daß** die Membran (23) an den aneinanderanschließenden Enden der Profilabschnitte (21) einen Endabschnitt (24) aufweist, welcher zumindest annähernd auf die Materialstärke der Deckschichten (12, 13; 16, 17) verstärkt ist.

2. Wärmeisolierende Wandung nach Anspruch 1, **dadurch gekennzeichnet, daß** das Verbindungsprofil (20) einen u-profilartigen Querschnitt aufweist, wobei die Schenkel (22) des U-Profils an den Deckschichten (12, 13; 16, 17) festgesetzt sind, während die als Membran dienende Basis (23) des U-Profils zumindest weitestgehend den Abstand zwischen den Deckschichten (12, 13; 16, 17) überbrückt.

3. Wärmeisolierende Wandung nach Anspruch 1 oder 2, **dadurch gekennzeichnet, daß** die Verstärkung des Endabschnitts (24) der Membrane (23) durch ein Verstärkungsteil (25) erzielt ist.

4. Wärmeisolierende Wandung nach Anspruch 3, **dadurch gekennzeichnet, daß** das Verstärkungsteil (25) an der Membrane (23) der einzelnen Profilabschnitte (21) bei deren Herstellung vakuumdicht festgesetzt ist.

5. Wärmeisolierende Wandung nach einem der Ansprüche 1 oder 2, **dadurch gekennzeichnet, daß** die Verstärkung des Endabschnitts (24) der Membrane (23) anhand einer durch mehrmaliges Umfalzen erzeugten Schichtung eines einstückig an die Membrane (23) mitangeformten Fortsatzes erzielt ist.

6. Wärmeisolierende Wandung nach einem der Ansprüche 1 bis 5, **dadurch gekennzeichnet, daß** die aneinander anschließenden, verstärkt ausgeführten Endabschnitte (24) der Membrane (23) an den Profilabschnitten (21) auf einem vakuumdicht an den Deckschichten (12, 13; 16, 17) festgesetzten Stützelement (26) aufliegen und mit diesem vakuumdicht verbunden sind.

7. Wärmeisolierende Wandung nach Anspruch 6, **dadurch gekennzeichnet, daß** das Stützelement (26) als U-Profil ausgebildet ist, auf dessen Basis (28) die Endabschnitte (24) der Membrane (23) aufliegen und mit dieser vakuumdicht verbunden sind.

8. Wärmeisolierende Wandung nach Anspruch 7, **dadurch gekennzeichnet, daß** das als U-Profil ausgebildete Stützelement (26) mit seinen Stirnflächen an den Deckschichten (12, 13; 16, 17) vakuumdicht festgesetzt sind.

9. Wärmeisolierende Wandung nach einem der Ansprüche 7 oder 8, **dadurch gekennzeichnet, daß** das als U-Profil ausgebildete Stützelement (26) neben seinen Schenkeln (27) an seinen Stirnseiten mit schenkelseitig gegenüber seiner Basis (28) vorspringenden Laschen versehen ist, welche an den Deckschichten (12, 13; 16, 17) vakuumdicht festgesetzt sind.

10. Wärmeisolierende Wandung nach Anspruch 7, **dadurch gekennzeichnet, daß** das Stützelement (26) als Napf mit wenigstens zwei zumindest annähernd parallel einander gegenüberliegenden Napfwänden ausgebildet ist, mit welchen es an den Deckschichten (12, 13; 16, 17) vakuumdicht festgesetzt ist.

11. Kältegerät mit einem wärmeisolierende Gehäuse und einer wärmeisolierenden Tür, **dadurch gekennzeichnet, daß** das Gehäuse (10) und die Tür (15) nach einem der Ansprüche 1 bis 10 ausgebildet ist.

12. Haushaltsherd mit einer einem Backraum umgrenzenden, wärmeisolierenden Herdmuffel, **dadurch gekennzeichnet, daß** die Herdmuffel nach einem der Ansprüche 1 bis 10 ausgebildet ist.

## Claims

1. Thermally insulating wall with two at least substantially vacuum-tight cover layers arranged at a mutual spacing, between which evacuatable thermal insulation material is arranged and which are connected together by a vacuum-tight connecting profile member, which extends along the free edges thereof and which has a membrane at least substantially bridging over the spacing between the two cover layers, the connecting profile member being composed of a plurality of profile member sections vacuum-tightly connected with one another, **characterised in that** the membrane (23) has at the mutually connected ends of the profile member sections (21) an end section (24) which is reinforced at least approximately to the material thickness of the cover layers (12, 13; 16, 17).

2. Thermally insulating wall according to claim 1, **characterised in that** the connecting profile member (20) has a cross-section like a U-profile, wherein the limbs (22) of the U-profile are fixed to the cover layers (12, 13; 16, 17), whilst the base (23), which serves as membrane, of the U-profile at least substantially bridges over the spacing between the cover layers (12, 13; 16, 17).

3. Thermally insulating wall according to claim 1 or 2, **characterised in that** the reinforcing of the end section (24) of the membrane (23) is achieved by a reinforcing part (25).

4. Thermally insulating wall according to claim 3, **characterised in that** the reinforcing part (25) is vacuum-tightly fixed to the membrane (23) of the individual profile member sections (21) during manufacture thereof.

5. Thermally insulating wall according to one of claims 1 and 2, **characterised in that** the reinforcing of the end section (24) of the membrane (23) is achieved on the basis of layering, which is produced by multiple folding-over, of a projection integrally formed at the membrane (23).

6. Thermally insulating wall according to one of claims 1 to 5, **characterised in that** the mutually connected end sections (24), which are formed to be reinforced, of the membrane (23) at the profile member sections (21) rest on a support element (26), which is vacuum-tightly fixed to the cover layers (12, 13; 16, 17), and are vacuum-tightly connected with this support element.

7. Thermally insulating wall according to claim 6, **characterised in that** the support element (26) is constructed as a U-profile, on the base (28) of which the end sections (24) of the membrane (23) rest and are vacuum-tightly connected therewith.

8. Thermally insulating wall according to claim 7, **characterised in that** the support element (26) of U-profile construction is vacuum-tightly fixed by its end surfaces to the cover layers (12, 13; 16, 17).

9. Thermally insulating wall according to one of claims 7 and 8, **characterised in that** the support element (26) of U-profile construction is provided, apart from its limbs (27), at its end faces with straps which protrude at the limb side relative to the base (28) of the support element and which are vacuum-tightly fixed to the cover layers (12, 13; 16, 17).

10. Thermally insulating wall according to claim 7, **characterised in that** the support element (26) is constructed as a cup with at least two mutually opposite cup walls which are at least approximately parallel to one another and by which it is vacuum-tightly fixed to the cover layers (12, 13; 16, 17).

11. Refrigerating appliance with a thermally insulating housing and a thermally insulating door, **characterised in that** the housing (10) and the door (15) are constructed according to one of claims 1 to 10.

12. Domestic oven with a thermally insulating oven muffle surrounding a baking chamber, **characterised in that** the oven muffle is constructed according to one of claims 1 to 10.

## Revendications

1. Paroi calorifuge comprenant deux couches de revêtement disposées à distance l'une de l'autre et au moins substantiellement étanches au vide, entre lesquelles sont placées des matières calorifuges évacuables et lesquelles sont reliées entre elles par un profilé de jonction étanche au vide s'étendant le long de leurs bords libres, lequel profilé comporte une membrane franchissant au moins substantiellement la distance entre les deux couches de revêtement et se compose de plusieurs portions de profilé raccordées les unes aux autres de manière étanche au vide, **caractérisée en ce qu'**aux extrémités raccordées les unes aux autres des portions de profilé (21), la membrane (23) comporte une portion d'extrémité (24) laquelle est renforcée de manière à correspondre au moins approximativement à l'épaisseur de matière des couches de revêtement (12, 13 ; 16, 17).

2. Paroi calorifuge selon la revendication 1, **caractérisée en ce que** le profilé de jonction (20) présente une section de type profilé en U, les branches (22) du profilé en U étant fixées aux couches de revêtement (12, 13 ; 16, 17) tandis que la base (23) du profilé en U, servant de membrane, franchit au moins dans une large mesure la distance entre les couches de revêtement (12, 13 ; 16, 17).

3. Paroi calorifuge selon la revendication 1 ou 2, **caractérisée en ce que** le renforcement de la portion d'extrémité (24) de la membrane (23) est obtenu par une pièce de renforcement (25).

4. Paroi calorifuge selon la revendication 3, **caractérisée en ce que** la pièce de renforcement (25) est fixée de manière étanche au vide à la membrane (23) des différentes portions de profilé (21) lors de leur fabrication.

5. Paroi calorifuge selon l'une des revendications 1 ou 2, **caractérisée en ce que** le renforcement de la portion d'extrémité (24) de la membrane (23) est réalisé à l'aide d'un empilage obtenu par plusieurs opérations de repliage d'un prolongement formé en une pièce sur la membrane (23).

6. Paroi calorifuge selon l'une des revendications 1 à 5, **caractérisée en ce que** les portions d'extrémité (24) de la membrane (23), raccordées les unes aux autres et renforcées, reposent au niveau des portions de profilé (21) sur un élément d'appui (26) fixé de manière étanche au vide aux couches de revêtement (12, 13 ; 16, 17) et sont reliées à celui-ci de manière étanche au vide.

7. Paroi calorifuge selon la revendication 6, **caractérisée en ce que** l'élément d'appui (26) est réalisé sous forme de profilé en U, les portions d'extrémité (24) de la membrane (23) reposant sur sa base (28) et étant reliées à celle-ci de manière étanche au vide.

8. Paroi calorifuge selon la revendication 7, **caractérisée en ce que** l'élément d'appui (26), réalisé sous forme de profilé en U, est fixé par ses faces frontales de manière étanche au vide aux couches de revêtement (12, 13 ; 16, 17).

9. Paroi calorifuge selon la revendication 7 ou 8, **caractérisée en ce que** l'élément d'appui (26), réalisé sous forme de profilé en U, est muni outre de ses branches (27) au niveau de ses faces frontales de pattes faisant saillie, côté branches, à l'opposé de sa base (28), lesquelles pattes sont fixées de manière étanche au vide aux couches de revêtement (12, 13 ; 16,17).

10. Paroi calorifuge selon la revendication 7, **caractérisée en ce que** l'élément d'appui (26) est réalisé sous forme de godet doté d'au moins deux parois placées au moins approximativement parallèlement en regard l'une de l'autre, par lesquelles il est fixé de manière étanche au vide aux couches de revêtement (12, 13 ; 16, 17).

11. Appareil frigorifique doté d'un habillage et d'une porte calorifuges, **caractérisé en ce que** l'habillage (10) et la porte (15) sont réalisés selon l'une des revendications 1 à 10.

12. Four ménager doté d'un moufle calorifuge délimitant un espace de cuisson, **caractérisé en ce que** le moufle est réalisé selon l'une des revendications 1 à 10.
